# FASCICULE DE BREVET EUROPEEN

(11) **EP 3 542 070 B1**
(45) Date de publication et mention de la délivrance du brevet: **17.06.2020**
(21) Numéro de dépôt: 17801024.5
(22) Date de dépôt: 03.11.2017
(51) Int. Cl.: F04D 29/52, F01D 11/00, F01D 11/12, F01D 25/02, F02C 7/047, F04D 29/16

(54) **VIROLE ANTIGIVRE DE COMPRESSEUR DE TURBOMACHINE AXIALE**
VEREISUNGSSCHUTZ DES DECKBANDES EINES AXIALTURBOMASCHINENKOMPRESSORS
ANTI-ICING SHROUD OF AN AXIAL-TURBOMACHINE COMPRESSOR

(30) Priorité: 15.11.2016 BE 201605859
(43) Date de publication de la demande: 25.09.2019
(73) Titulaire: Safran Aero Boosters SA, 4041 Herstal (BE)
(72) Inventeur: PEREZ, Rafael, 4100 Boncelles (BE)
(74) Mandataire: Lecomte & Partners
(86) Numéro de dépôt international: PCT/EP2017/078208
(87) Numéro de publication internationale: WO 2018/091288

(56) Documents cités:
- EP-A1- 3 023 511
- FR-A1- 2 943 717
- US-A1- 2009 196 730

## Description

### Domaine technique

L'invention se rapporte au domaine du dégivrage d'une turbomachine. Plus précisément, l'invention concerne un ensemble pour virole de turbomachine. L'invention a également trait à une turbomachine axiale, notamment un turboréacteur d'avion ou un turbopropulseur d'aéronef. L'invention propose en outre une utilisation d'une couche d'abradable.

### Technique antérieure

Le document EP 2 418 387 A1 divulgue une virole de turboréacteur. La virole comprend: un support de forme généralement annulaire ou cylindrique avec une surface interne généralement circulaire; un anneau avec une surface interne et une surface externe opposée à ladite surface interne et disposée sur la surface interne dudit support; une couche de matériau abradable disposée sur la surface interne dudit anneau; remarquable en ce que ledit support est en matériau composite à matrice organique; et ledit anneau est en matériau métallique. Un tel arrangement permet de lier efficacement une couche abradable à un carter composite afin de garantir l'étanchéité.

Or dans un turboréacteur, une virole peut être sujette au phénomène de givrage. Lorsqu'un tel événement survient la glace peut se former au contact de la virole interne et de la virole externe tout en tapissant les surfaces intrados et extrados des aubes. A l'extrême, l'accumulation de givre parvient à boucher les passages entre les aubes, et donc à couper l'entrée d'air du compresseur qui ne peut plus alimenter la chambre de combustion. Le turboréacteur ne parvient plus à fournir de poussée.

Le document EP 3 023 511 A1 divulgue une composition pour joint abradable de compresseur de turbomachine. Le compresseur comprend des éléments chauffants aptes à réchauffer un revêtement de matériau abradable. Or aucune fonction n'est associée à ce chauffage.

### Résumé de l'invention

### Problème technique

L'invention a pour objectif de résoudre au moins un des problèmes posés par l'art antérieur. Plus précisément, l'invention a pour objectif d'optimiser le dégivrage d'une virole de turbomachine, et éventuellement d'un redresseur en entrée de compresseur. L'invention a également pour objectif de garantir le passage axial le long d'une virole de turbomachine. L'invention a également pour objectif de proposer une solution simple, résistante, légère, économique, fiable, facile à produire, commode d'entretien, d'inspection aisée, et améliorant le rendement.

### Solution technique

L'invention a pour objet un ensemble pour virole de turbomachine axiale à rotor, notamment une virole d'entrée de compresseur de turbomachine, l'ensemble comprenant une virole avec une couche annulaire de matériau abradable apte à coopérer par abrasion avec le rotor de la turbomachine, remarquable en ce qu'il comprend en outre un module de chauffage de la couche d'abradable afin de s'opposer à la présence de givre sur la virole.

Selon des modes avantageux de l'invention, l'ensemble peut comprendre une ou plusieurs des caractéristiques suivantes, prises isolément ou selon toutes les combinaisons techniques possibles :

Le module de chauffage comprend une résistance électrique chauffante en contact thermique de la couche d'abradable, préférentiellement, la résistance électrique présente une section inférieure ou égale à 1mm², ou à 0,10mm².

La résistance électrique chauffante est disposée dans l'épaisseur radiale de la couche d'abradable.

La résistance électrique chauffante comprend une ou plusieurs nappes électriques chauffantes.

La couche d'abradable comprend une surface d'enveloppe, le module de chauffage étant en contact de ladite surface d'enveloppe.

La surface d'enveloppe comprend une surface annulaire interne et/ou une surface annulaire externe, le module de chauffage étant en contact de la surface annulaire interne et/ou de la surface annulaire externe.

Le matériau abradable est électriquement résistif et est configuré pour chauffer afin de s'opposer à la présence de givre sur la virole lorsque le module de dégivrage alimente électriquement ledit matériau de la couche abradable.

La couche d'abradable comprend des particules électriquement conductrices et configurées pour chauffer la virole afin de s'opposer à la présence de givre sur la virole.

La couche d'abradable forme un bloc de matière chauffant, notamment via une source d'énergie.

La virole comprend en outre une cloison annulaire supportant la couche d'abradable au niveau d'une surface d'interface, le module de chauffage formant au moins partiellement ladite interface.

Le module de chauffage comprend une source de champ magnétique apte à chauffer la couche d'abradable.

La couche d'abradable comprend une première couche annulaire à distance radialement du module de chauffage et/ou une deuxième couche annulaire en contact du module de chauffage et qui présente une conductivité thermique supérieure à la conductivité thermique de la première couche.

Le module de chauffage comprend un réseau chauffant en contact thermique de la couche d'abradable, ledit réseau étant éventuellement disposé dans l'épaisseur radiale de la couche d'abradable.

Le réseau comprend une ou plusieurs canalisations pour fluide chauffant, notamment un gaz ou un liquide tel de l'huile.

La virole est électriquement isolante et/ou électriquement isolée de la couche d'abradable.

Le module de chauffage est adapté pour chauffer la couche d' abradable par ondes et/ou à l'aide d'un champ magnétique.

La virole comprend une surface annulaire de guidage de flux annulaire de la turbomachine, ladite surface étant généralement tubulaire, et/ou entourant le module de chauffage.

L'épaisseur radiale moyenne de la couche d'abradable est supérieure ou égale à : 2,00mm, ou à 5,00mm.

La résistance électrique chauffante et/ou le réseau chauffant et/ou la ou plusieurs ou chaque canalisation de fluide chauffant forme(nt) au moins partiellement l'interface entre la couche d'abradable et la cloison annulaire de la virole ; et/ou est/sont disposés dans la couche thermiquement conductrice.

Le matériau de la couche d'abradable est électriquement résistif de manière à le réchauffer lorsqu'il est alimenté électriquement afin de s'opposer à la présence de givre sur la virole.

L'invention a également pour objet un ensemble pour joint de turbomachine axiale à rotor, notamment un joint d'entrée de compresseur de turbomachine, l'ensemble comprenant un joint avec une couche annulaire de matériau abradable apte à coopérer de manière étanche avec le rotor de la turbomachine, remarquable en ce qu'il comprend en outre un module de chauffage de la couche d'abradable afin de s'opposer à la présence de givre sur la virole.

L'invention a également pour objet une turbomachine, notamment un turboréacteur, comprenant un ou au moins deux ensembles, remarquable en ce que le ou les au moins deux ensembles est/sont conforme(s) à l'invention, préférentiellement la turbomachine comprend un compresseur, la ou les au moins deux viroles d'ensemble étant des viroles dudit compresseur, le compresseur étant éventuellement un compresseur basse pression.

Selon des modes avantageux de l'invention, l'ensemble peut comprendre une ou plusieurs des caractéristiques suivantes, prises isolément ou selon toutes les combinaisons techniques possibles :
La virole est une virole interne de redresseur amont du compresseur.

La turbomachine comprend un bec de séparation, éventuellement en entrée du compresseur, la virole étant une virole externe du bec de séparation.

La turbomachine comprend une unité de commande configurée de sorte à chauffer la couche d'abradable de sorte que la température de la virole reste supérieure à 0°C.

La turbomachine comprend une rangée annulaire d'aubes statoriques rigidement liées à la virole, le module de chauffage étant apte à chauffer la couche d'abradable de manière à s'opposer à la présence de givre sur les dites aubes statoriques, notamment au travers de la ou d'au moins une virole.

Le rotor de la turbomachine comprend au moins une ou plusieurs léchettes coopérant par abrasion avec la couche d'abradable, la ou au moins une ou chaque léchette étant éventuellement à distance axialement et/ou radialement du module de chauffage de la couche d' abradable.

La ou au moins une ou chaque léchette étant axialement à distance de la résistance électrique chauffante ; et/ou du réseau chauffant ; et/ou de la ou de plusieurs ou de chaque canalisation de fluide chauffant.

Le compresseur comprend une pluralité de viroles internes dont une virole interne amont, la virole interne présentant un module de chauffage de la couche d'abradable afin de s'opposer à la présence de givre étant en aval de la virole amont.

L'invention a également pour objet une utilisation d'une couche d' abradable chauffante pour dégivrer une virole de turbomachine axiale, la couche abradable comprenant éventuellement un matériau silicone ou une composition aluminium silicone polymère ou une composition aluminium nickel polymère, ladite couche d'abradable étant préférentiellement une couche d'abradable de virole associée à un module de chauffage de manière à former un ensemble conforme à l'invention.

La couche d'abradable peut être intrinsèquement chauffante. Par intrinsèquement chauffante on peut entendre que la couche est apte à fournir des calories par elle-même. La couche d'abradable peut être un convertisseur d'énergie, par exemple convertissant une énergie électrique en une énergie thermique.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

L'invention permet de couvrir efficacement les viroles tout en employant un système simple et compact puisqu'il se loge en partie dans les couches d'abradable. Cette solution est particulièrement bénéfique dans le contexte d'une virole interne en entrée de compresseur. Le dégivrage reste optimal même lorsque la virole interne s'étend en amont du bord de séparation du bec de séparation.

L'énergie utilisée dans l'invention est facilement transportée et répartie dans la virole. La masse du système de dégivrage reste essentiellement réduite puisque les résistances électriques ou les canalisations restent minces, tout comme leur raccordement à l'unité de commande. L'invention ajoute un corps dans l'abradable qui en améliore la résistance sans en modifier la compacité.

L'étendue de couverture peut être augmentée tout en restant homogène. Cette étendue peut être optimisée en fonction de l'importance du phénomène de givrage. Par conduction thermique via les aubes, l'effet antigivre se propage sur les surfaces intrados et extrados.

### Brève description des dessins

La figure 1 représente une turbomachine axiale selon l'invention.
La figure 2 est un schéma d'un compresseur de turbomachine selon l'invention.
La figure 3 illustre un ensemble pour virole selon un premier mode de réalisation de l'invention.
La figure 4 illustre un ensemble pour virole selon un deuxième mode de réalisation de l'invention.
La figure 5 illustre un ensemble pour virole selon un troisième mode de réalisation de l'invention.
La figure 6 illustre un ensemble pour virole selon un quatrième mode de réalisation de l'invention.
La figure 7 illustre un ensemble pour virole selon un cinquième mode de réalisation de l'invention.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

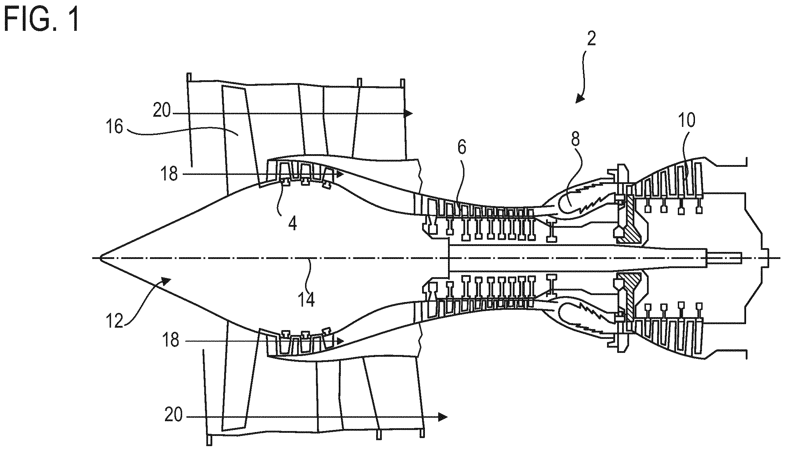

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 traversant les différents niveaux sus mentionnés de la turbomachine, et en un flux secondaire 20 traversant un conduit. Le flux secondaire peut être accéléré de sorte à générer une réaction de poussée.

Les flux primaire 18 et secondaire 20 sont des flux annulaires coaxiaux et emmanchés l'un dans l'autre. La soufflante peut être du type non carénée, par exemple à double rotor contrarotatifs, éventuellement en aval.

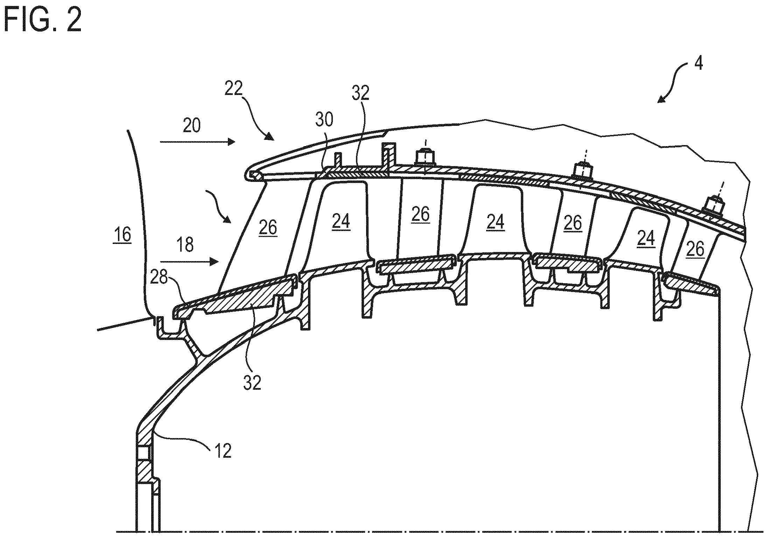

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis une virole interne 28 jusqu'à une virole externe 30, ou à un carter externe. Lesdites viroles (28 ; 30) peuvent porter des couches annulaires de matériau abradable 32. Ces couches de matériau abradable 32 parviennent à s'effriter ou à s'user lors du contact avec le rotor 12 sans l'endommager. Grâce à cette propriété, les couche d'abradable 32 peuvent être rapprochées des aubes rotoriques 24 et des léchettes, ce qui permet d'améliorer l'étanchéité dynamique.

Afin de s'opposer à la présence de givre, la turbomachine est munie d'un système de dégivrage, ou système antigivre, associé à au moins une ou à au moins deux couche d'abradable 32 en amont du compresseur 4. Au moins une ou chaque virole (28 ; 30) est réalisée en matériau isolant électriquement, par exemple en composite à matrice organique.

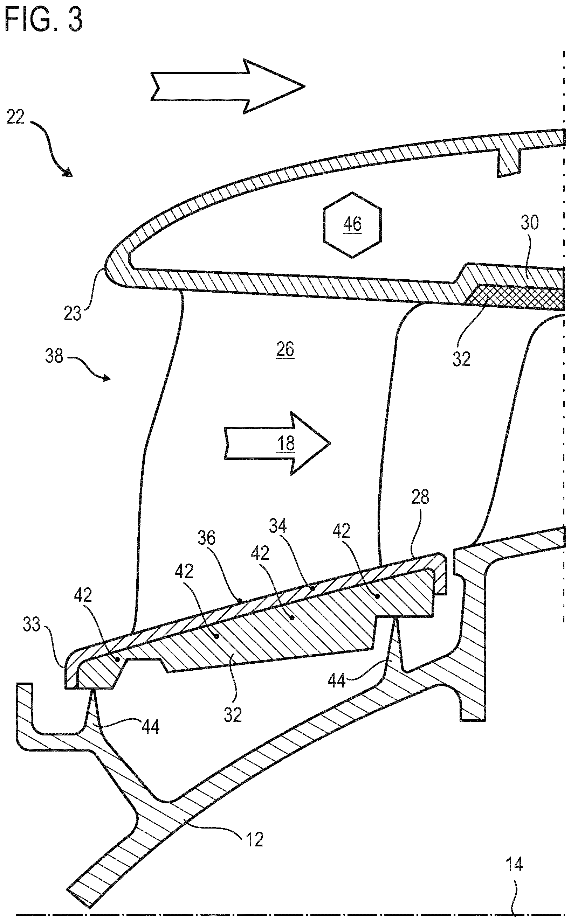

La figure 3 esquisse un ensemble pour virole (28 ; 30) selon l'invention selon un premier mode de réalisation de l'invention.

La virole interne 28 présente une cloison annulaire 34 qui supporte une couche d'abradable 32. La virole interne 28 peut être une virole en entrée du compresseur, et peut s'étendre jusqu'à la soufflante via un porte à faux amont. Son bord amont 33 peut dépasser le bord de séparation 23 du bec de séparation 22. Le profil annulaire de la cloison annulaire 34 s'étend principalement axialement. La cloison 34 peut être tubulaire, et sensiblement conique en option. Elle montre une surface externe 36 en contact du flux primaire 18 de sorte à le délimiter et à le guider.

L'ensemble comprend un module de chauffage 38 de la couche d'abradable 32 afin de réduite et d'empêcher la formation, et/ou l'accumulation, de glace sur la virole interne 28. Une efficacité est apportée en extrémité interne des aubes statoriques 26. Le module de chauffage 38 est en contact thermique de la couche d'abradable 32. Il est noyé dedans. L'enveloppe externe de cette dernière enveloppe également le module de chauffage 38. La couche d'abradable 32 et l'optionnelle cloison 34 protègent le module de chauffage 38 du flux primaire 18, notamment de son abrasion.

Le matériau abradable peut être du silicone, par exemple moulé à même la cloison 34 en encapsulant le module de chauffage. Ou encore, le matériau abradable peut être projeté par plasma dans la virole interne 28. Il peut s'agir d'une matrice polymère renfermant des grains métalliques, par exemple du type aluminium nickel, ou aluminium silicium.

Le module de chauffage 38 comprend une ou plusieurs résistances électriques chauffantes 42 en contact thermique de la couche d'abradable 32, et préférentiellement noyées dedans. Les résistances 42 sont des conducteurs électriques. Elles produisent de la chaleur par effet joule. Il peut s'agir d'un ou de plusieurs fils électriques résistifs placés à cœur de l'abradable. Les résistances électriques chauffantes peuvent également être des rubans électriques. Ces rubans peuvent former des nappes chauffantes, qui décrivent éventuellement des serpentins ou des cercles autour de l'axe de rotation 14.

Ces résistances chauffantes 42 peuvent s'étendre selon la circonférence, autour de l'axe de rotation 14. Ils peuvent former des cercles parallèles et coaxiaux qui sont répartis axialement le long de la virole 28. Dans le présent exemple, quatre résistances chauffantes 42 sont représentées, toutefois tout autre nombre est envisageable.

Les résistances électriques chauffantes 42 peuvent chacune être monobrin, et montrer une section conductrice inférieure ou égale à : 1mm², ou à 0,10mm², ou à 0,02mm². La réduction de leur section augmente la résistance électrique tout en en diminuant la masse.

Les résistances chauffantes 42 sont disposées le long de la virole interne 28. Au moins une ou plusieurs résistances chauffantes 42 sont disposées axialement au niveau des aubes statoriques 26. A cet emplacement, l'apport de chaleur peut être communiqué aux aubes 26 par conduction thermique. Cela tend à les dégivrer et à augmenter la surface d'échange de chaleur avec le flux primaire 18. Ainsi, la capacité du système s'améliore au niveau radialement de la surface externe 36, et protège les couches limites contre le givre.

Afin d'optimiser l'étanchéité, le rotor 12 du compresseur peut montrer au moins une ou plusieurs léchettes 44 coopérant par abrasion avec la couche d'abradable 32. Ces léchettes 44 forment des nervures annulaires saillantes aptes à creuser des sillons en cas de contact avec l'abradable 32. Optionnellement, chaque léchette 44 est éloignée des résistances électriques chauffantes 42, par exemple axialement et/ou radialement. L'éloignement radial peut être conçu pour éviter les sillons. Ainsi, l'éventuel contact des léchettes 44 avec l'abradable 32 ne dégrade pas le système de dégivrage.

Le pilotage des modules de chauffage s'opère grâce à une unité de commande 46 du système de dégivrage. Le système peut détecter la présence de givre, mesurer une température, une humidité du flux primaire 18. L'unité de commande 46 peut être configurée de sorte à chauffer la couche d'abradable 32 de sorte que la température de la virole 28 reste supérieure à : 0°C, ou 20°C, ou 50°C. Des branchements électriques (non représentés) peuvent traverser les aubes 26, et éventuellement une partie du bec de séparation 22, comme un tronçon axial du compresseur.

Suivant une option de l'invention, le module de chauffage comprend une source de champ magnétique apte à chauffer la couche d'abradable, par exemple en générant un courant alternatif dans les résistances électriques chauffantes. La source de champ magnétique peut être logée dans le bec de séparation.

Le présent enseignement peut également s'appliquer à la couche d'abradable 32 de la virole externe 30 du bec de séparation 22, en y logeant un module de chauffage tel que précédemment décrit.

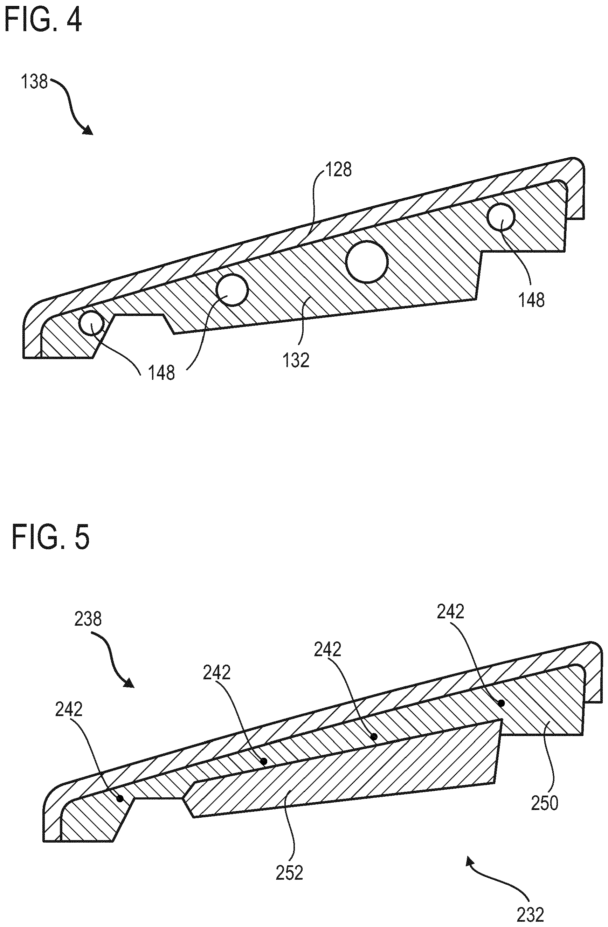

La figure 4 représente un ensemble selon un deuxième mode de réalisation de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à ce mode de réalisation. La figure 4 offre un agrandissement au niveau de la virole interne 128.

Le deuxième mode de réalisation est sensiblement identique au premier mode de réalisation, il s'en distingue par la présence de canalisations 148 dans le module de chauffage 138. Ces canalisations 148 peuvent être directement formées par le matériau propre de la couche d'abradable 132, ou par des tuyaux rapportés. Les canalisations 148 peuvent former un réseau dans l'épaisseur de la couche d'abradable 132, elles balayent la circonférence et la longueur axiale de la virole interne 128. Elles peuvent former plusieurs tores internes à la virole. Leurs sections de passage peuvent varier d'un tore à l'autre.

Ces canalisations 148 peuvent véhiculer un fluide réchauffant, par exemple un gaz chaud prélevé dans le compresseur haute pression, ou un liquide tel de l'huile de lubrification de la turbomachine. La circulation du fluide réchauffe la virole 128 et s'oppose à la présence de givre.

La figure 5 représente un ensemble selon un troisième mode de réalisation de l'invention. Cette figure 5 reprend la numérotation des figures précédentes pour les éléments identiques ou similaires, la numération étant toutefois incrémentée de 200. Des numéros spécifiques sont utilisés pour les éléments spécifiques à ce mode de réalisation.

Le troisième mode de réalisation est sensiblement identique au premier mode de réalisation, il en diffère toutefois en ce que la couche d'abradable 232 est scindée, notamment radialement. Elle comprend une couche annulaire externe 250, dite deuxième couche ; et une couche annulaire interne 252, dite première couche, emmanchée dans la précédente. La couche externe 250 peut recevoir le module de chauffage 238, et notamment les résistances électriques 242. Elle peut être une couche thermiquement conductrice, qui conduit davantage la chaleur que la couche interne 252, par exemple au moins deux fois, ou au moins dix fois. Le module de chauffage 238 peut essentiellement être renfermé dans la couche externe 250.

Cette configuration oriente l'échange de chaleur vers la cloison de la virole pour mieux la dégivrer.

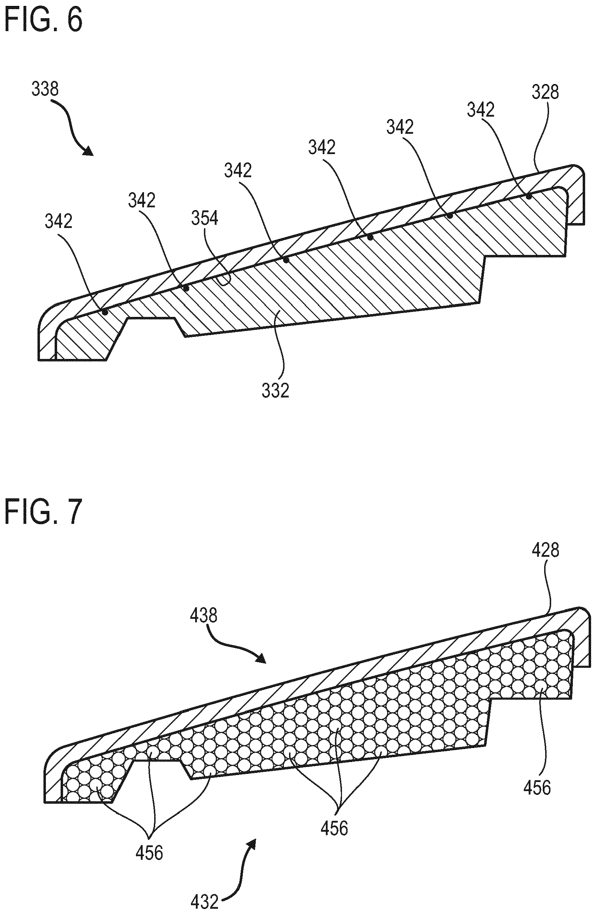

La figure 6 représente un ensemble selon un quatrième mode de réalisation de l'invention. Cette figure 6 reprend la numérotation des figures précédentes pour les éléments identiques ou similaires, la numération étant toutefois incrémentée de 300.

Le quatrième mode de réalisation est sensiblement identique au premier mode de réalisation, il en diffère toutefois en ce que le module de chauffage 338 est disposé sur l'enveloppe de la couche d'abradable 332, l'enveloppe peut former la peau de l'abradable. Le module de chauffage 338, et notamment des ou chaque résistance électrique chauffante 342 est disposée à l'interface entre la virole interne 328 et la couche de matériau abradable 332. Le module de chauffage 338 reste dans l'épaisseur de la couche d'abradable 332. La virole 328 présente une surface d'interface 354 essentiellement lisse en contact de l'abradable 332 et du module 338.

La figure 7 représente un ensemble selon un cinquième mode de réalisation de l'invention. Cette figure 7 reprend la numérotation des figures précédentes pour les éléments identiques ou similaires, la numération étant toutefois incrémentée de 400. Des numéros spécifiques sont utilisés pour les éléments spécifiques à ce mode de réalisation.

Le cinquième mode de réalisation est sensiblement identique au premier mode de réalisation. Cependant, il s'en démarque par la présence de particule 456 dans le module de chauffage 438. Ces particules 456 sont électriquement conductrices. Elles sont réparties dans le matériau abradable 432. Elles peuvent être réparties dans une matrice isolante électriquement. Elles peuvent être en contact les unes des autres, et alimentés par des branchements. Alors, le matériau abradable est électriquement résistif et est configuré pour chauffer afin de s'opposer à la présence de givre sur la virole 428. Ou encore, les particules 456 peuvent être à distance les unes des autres et être réchauffées par ondes, tel un champ électrique ou un champ magnétique.

Selon l'invention, une même virole peut combiner les cinq modes de réalisation de l'invention. Les modules de chauffages peuvent être répartis axialement et/ou radialement dans la masse d'une même couche d'abradable.

## Revendications

1. Ensemble pour virole de turbomachine axiale (2) à rotor (12), notamment une virole d'entrée de compresseur (4) de turbomachine, l'ensemble comprenant une virole (28 ; 30 ; 128 ; 328 ; 428) avec une couche annulaire de matériau abradable (32; 132; 232; 332; 432) apte à coopérer par abrasion avec le rotor (12) de la turbomachine (2),
**caractérisé en ce qu'**il comprend en outre
un module de chauffage (38; 138; 238; 338; 438) de la couche d'abradable (32 ; 132 ; 232 ; 332 ; 432) afin de s'opposer à la présence de givre sur la virole (28 ; 30 ; 128 ; 328 ; 428).

2. Ensemble selon la revendication 1, **caractérisé en ce que** le module de chauffage (38 ; 238 ; 338) comprend une résistance électrique chauffante (42 ; 242 ; 342) en contact thermique de la couche d'abradable (32 ; 232 ; 332), préférentiellement, la résistance électrique (42 ; 242 ; 342) présente une section inférieure ou égale à 1mm², ou à 0,10mm²., que la résistance électrique chauffante (42 ; 242 ; 342) étant éventuellement disposée dans l'épaisseur radiale de la couche d'abradable (32 ; 232 ; 332) et/ou comprenant éventuellement une ou plusieurs nappes électriques chauffantes.

3. Ensemble selon l'une des revendications 1 ou 2, **caractérisé en ce que** la couche d'abradable (332) comprend une surface d'enveloppe, le module de chauffage (338) étant en contact physique de ladite surface d'enveloppe, la surface d'enveloppe comprenant éventuellement une surface annulaire interne (354) et/ou une surface annulaire externe, le module de chauffage (338) étant en contact physique de la surface annulaire interne (354) et/ou de la surface annulaire externe.

4. Ensemble selon l'une des revendications 1 à 3, **caractérisé en ce que** la couche abradable (432) est électriquement résistive et est configurée pour chauffer afin de s'opposer à la présence de givre sur la virole (428) lorsque le module de dégivrage (438) alimente électriquement ledit matériau de la couche abradable (432).

5. Ensemble selon l'une des revendications 1 à 4, **caractérisé en ce que** la couche d'abradable (432) comprend des particules électriquement conductrices et configurées pour chauffer la virole (428) afin de s'opposer à la présence de givre sur la virole (428).

6. Ensemble selon l'une des revendications 1 à 5, **caractérisé en ce que** la virole (28) comprend en outre une cloison annulaire (34) supportant la couche d'abradable (32) au niveau d'une surface d'interface, le module de chauffage (38) formant au moins partiellement ladite interface.

7. Ensemble selon l'une des revendications 1 à 6, **caractérisé en ce que** le module de chauffage (438) comprend une source de champ magnétique apte à chauffer la couche d'abradable (432).

8. Ensemble selon l'une des revendications 1 à 7, **caractérisé en ce que** la couche d'abradable (232) comprend une première couche annulaire (252) à distance radialement du module de chauffage (238) et/ou une deuxième couche annulaire (250) en contact du module de chauffage (238) et qui présente une conductivité thermique supérieure à la conductivité thermique de la première couche (252).

9. Ensemble selon l'une des revendications 1 à 8, **caractérisé en ce que** le module de chauffage comprend un réseau chauffant en contact thermique de la couche d'abradable (132), ledit réseau étant éventuellement disposé dans l'épaisseur radiale de la couche d'abradable (132), le réseau comprenant éventuellement une ou plusieurs canalisations (148) pour fluide chauffant, notamment un gaz ou un liquide tel de l'huile.

10. Turbomachine (2), notamment un turboréacteur, comprenant un ou au moins deux ensembles, **caractérisée en ce que** le ou les au moins deux ensembles est/sont conforme(s) à l'une des revendications 1 à 9, préférentiellement la turbomachine (2) comprend un compresseur, la ou les au moins deux viroles (28; 30; 128; 328; 428) d'ensemble étant des viroles internes de redresseur amont dudit compresseur, le compresseur étant éventuellement un compresseur basse pression (4).

11. Turbomachine (2) selon la revendication 10, **caractérisée en ce qu'**elle comprend un bec de séparation (22), éventuellement en entrée du compresseur, la virole étant une virole externe (30) du bec de séparation (22).

12. Turbomachine (2) selon l'une des revendications 10 à 11, **caractérisée en ce qu'**elle comprend une unité de commande (46) configurée de sorte à chauffer la couche d'abradable (32) de sorte que la température de la virole (28 ; 30) reste supérieure à 0°C.

13. Turbomachine (2) selon l'une des revendications 10 à 12, **caractérisée en ce qu'**elle comprend une rangée annulaire d'aubes statoriques (26) rigidement liées à la virole (28 ; 30), le module de chauffage (38) étant apte à chauffer la couche d'abradable (32) de manière à s'opposer à la présence de givre sur les dites aubes statoriques (26).

14. Turbomachine (2) selon l'une des revendications 10 à 13, **caractérisée en ce que** le rotor (12) de la turbomachine (2) comprend au moins une ou plusieurs léchettes (44) coopérant par abrasion avec la couche d'abradable (32), la ou au moins une ou chaque léchette (44) étant éventuellement à distance axialement et/ou radialement du module de chauffage (38) de la couche d'abradable (32).

15. Utilisation d'une couche d'abradable (32 ; 132 ; 232 ; 332 ; 432) chauffante pour dégivrer une virole (28 ; 30 ; 128 ; 328 ; 428) de turbomachine axiale, la couche abradable (32 ; 132 ; 232 ; 332 ; 432) comprenant éventuellement un matériau silicone ou une composition aluminium silicone polymère ou une composition aluminium nickel polymère, ladite couche d'abradable (32 ; 132 ; 232 ; 332 ; 432) étant préférentiellement une couche d'abradable de virole (28 ; 30 ; 128 ; 328 ; 428) associée à un module de chauffage (38 ; 138 ; 238 ; 338 ; 438) de manière à former un ensemble conforme à l'une des revendications 1 à 9.

## Patentansprüche

1. Anordnung für Klemmring einer axialen Turbomaschinen (2) mit einem Rotor (12), insbesondere ein Kompressoreintritts-Klemmring (4) einer Turbomaschine, wobei die Anordnung einen Klemmring (28; 30; 128; 328; 428) mit einer ringförmigen Schicht aus abriebfestem Material (32; 132; 232; 332; 432) aufweist, die durch Reibung mit dem Rotor (12) der Turbomaschine (2) zusammenwirken kann,
**dadurch gekennzeichnet, dass** sie ferner Folgendes umfasst:
ein Heizmodul (38; 138; 238; 338; 438) der abriebfesten Schicht (32; 132; 232; 332; 432), um dem Vorhandensein von Eis auf dem Klemmring (28 ; 30, 128 ; 328, 428) entgegenzuwirken.

2. Anordnung nach Anspruch 1, **dadurch gekennzeichnet, dass** das Heizmodule (38; 238; 338) einen elektrischen Heizwiderstand (42 ; 242 ; 342) umfasst, der in thermischem Kontakt mit der abriebfesten Schicht (32; 232; 332) ist, wobei der elektrische Widerstand (42; 242; 342) vorzugsweise einen Querschnitt von weniger als oder gleich 1 mm² oder 0,10 mm² aufweist, wobei der elektrische Heizwiderstand (42; 242; 342) wahlweise in der radialen Dicke der abriebfesten Schicht (32; 232; 332) angeordnet ist und/oder wahlweise eine oder mehrere elektrische Heizmatten aufweist.

3. Anordnung nach einem der Ansprüche 1 oder 2, **dadurch gekennzeichnet, dass** die abriebfeste Schicht (332) eine Hüllfläche umfasst, wobei das Heizmodul (338) in physikalischem Kontakt mit der Hüllfläche steht, wobei die Hüllfläche gegebenenfalls eine innere Ringfläche (354) und/oder eine äußere Ringfläche umfasst, wobei das Heizmodul (338) in physikalischem Kontakt mit der inneren Ringfläche (354) und/oder der äußeren Ringfläche steht.

4. Anordnung nach einem der Ansprüche 1 bis 3, **dadurch gekennzeichnet, dass** die abriebfeste Schicht (432) elektrisch resistiv ist und zum Erhitzen ausgelegt ist, um dem Vorhandensein von Eis auf dem Klemmring (428) entgegenzuwirken, wenn das Enteisungs-Modul (438) das genannte Material der abriebfesten Schicht (432) elektrisch versorgt.

5. Anordnung nach einem der Ansprüche 1 bis 4, **gekennzeichnet dadurch, dass** die abriebfeste Schicht (432) elektrisch leitende Partikel enthält und dazu ausgelegt ist, den Klemmring (428) zu erwärmen, um dem Vorhandensein von Eis auf dem Klemmring (428) entgegenzuwirken.

6. Anordnung nach einem der Ansprüche 1 bis 5, **dadurch gekennzeichnet, dass** der Klemmring (28) ferner eine ringförmige Trennwand (34) umfasst, die die abriebfeste Schicht (32) an einer Grenzflächenoberfläche trägt, wobei das Heizmodul (38) zumindest teilweise die Grenzfläche bildet.

7. Anordnung nach einem der Ansprüche 1 bis 6, **dadurch gekennzeichnet, dass** das Heizmodul (438) eine Magnetfeldquelle umfasst, die in der Lage ist, die abriebfeste Schicht (432) zu erwärmen.

8. Anordnung nach einem der Ansprüche 1 bis 7, **dadurch gekennzeichnet, dass** die abriebfeste Schicht (232) eine erste ringförmige Schicht (252) umfasst, die radial vom Heizmodul (238) beabstandet ist, und/oder eine zweite ringförmige Schicht (250) in Kontakt mit dem Heizmodul (238) und deren Wärmeleitfähigkeit größer ist als die Wärmeleitfähigkeit der ersten Schicht (252).

9. Anordnung nach einem der Ansprüche 1 bis 8, **dadurch gekennzeichnet, dass** das Heizmodul ein Heiznetz in thermischem Kontakt mit der abriebfesten Schicht (132) umfasst, wobei das Netz möglicherweise in der radialen Dicke der abriebfesten Schicht (132) angeordnet ist, wobei das Netz möglicherweise ein oder mehrere Leitungen (148) für ein Heizfluid, insbesondere eines Gases oder einer Flüssigkeit wie Öl, umfasst.

10. Turbomaschine (2), insbesondere ein Turbostrahltriebwerk, das eine oder mindestens zwei Anordnungen umfasst, **dadurch gekennzeichnet, dass** die mindestens zwei Anordnungen einem der Ansprüche 1 bis 9 entsprechen, wobei die Turbomaschine (2) vorzugsweise einen Kompressor umfasst, wobei der oder die mindestens zwei Klemmringe (28; 30; 128; 328; 428) der Anordnung interne Klemmringe des Gleichrichters vor dem Kompressor sind, wobei der Kompressor möglicherweise ein Niederdruckkompressor (4) ist.

11. Turbomaschine (2) nach Anspruch 10, **dadurch gekennzeichnet, dass** sie eine Trenndüse (22) umfasst, gegebenenfalls am Einlass des Kompressors, wobei der Klemmring ein äußerer Klemmring (30) der Trenndüse (22) ist.

12. Turbomaschine (2) nach einem der Ansprüche 10 bis 11, **dadurch gekennzeichnet, dass** sie eine Steuereinheit (46) umfasst, die so konfiguriert ist, dass sie die abriebfeste Schicht (32) so erwärmt, dass die Temperatur des Klemmrings (28; 30) über 0° C bleibt.

13. Turbomaschine (2) nach einem der Ansprüche 10 bis 12, **dadurch gekennzeichnet, dass** sie eine ringförmige Anordnung von Statorschaufeln (26) umfasst, die starr mit dem Klemmring (28; 30) verbunden sind, wobei das Heizmodul (38) in der Lage, ist die abriebfeste Schicht (32) zu erhitzen, um dem Vorhandensein von Eis auf den Statorschaufeln (26) entgegenzuwirken.

14. Turbomaschine (2) nach einem der Ansprüche 10 bis 13, **dadurch gekennzeichnet, dass** der Rotor (12) der Turbomaschine (2) mindestens einen oder mehrere Wischer (44) umfasst, die durch Abrieb mit der abriebfesten Schicht (32) zusammenwirken, wobei der oder mindestens ein oder jeder Wischer (44) gegebenenfalls axial und/oder radial vom Heizmodul (38) von der abriebfesten Schicht (32) beabstandet sind.

15. Verwendung einer abriebfesten Heizschicht (32; 132; 232; 332; 432) zum Enteisen eines Klemmrings (28; 30; 128; 328; 428) einer axialen Turbomaschine, wobei die abriebfeste Schicht (32; 132; 232; 332; 432) gegebenenfalls ein Silikonmaterial oder eine Aluminiumpolymer-Silikonzusammensetzung oder eine Aluminium-Nickel-Polymerzusammensetzung umfassend, wobei die abriebfeste Schicht (32; 132; 232; 332; 432) vorzugsweise eine abriebfeste Schicht des Klemmrings (28; 30; 128; 328; 428) ist, die einem Heizmodul (38; 138; 238; 338; 438) zugeordnet ist, um eine Anordnung gemäß einem der Ansprüche 1 bis 9 zu bilden.

## Claims

1. Assembly for a ferrule of an axial turbomachine (2) with a rotor (12), including an inlet ferrule for a compressor (4) of the turbomachine, the assembly comprising a ferrule (28; 30; 128; 328; 428) with an annular layer of abradable material (32; 132; 232; 332; 432) able to cooperate by abrasion with the rotor (12) of the turbomachine (2),
**characterised in that** it further comprises
a heater module (38; 138; 238; 338; 438) of the layer of abradable material (32; 132; 232; 332; 432) aimed at opposing the presence of frost on the ferrule (28; 30; 128; 328; 428).

2. Assembly according to claim 1, **characterized in that** the heater module (38; 238; 338) includes heated electrical resistance (42; 242; 342) in thermal contact of the layer of abradable (32; 232; 332), preferentially, the electrical resistance (42; 242; 342) presents a section less than or equal to 1 mm², or less than or equal to 0.10 mm², the electrical resistance heater (42; 242; 342) being potentially prepared in the radial thickness of the layer of abradable material (32; 232; 332) and/or including possibly one or several electrical heating ribbons.

3. Assembly according to one of the claims 1 or 2, **characterized in that** the layer of abradable material (332) includes an enveloping surface, the heater module (338) being in physical contact with the enveloping surface, the enveloping surface including possibly an internal annular surface (354) and/or an external annular surface, the heater module (338) being in physical contact with the internal annular surface (354) and/or of the annular surface external.

4. Assembly according to one of the claims 1 to 3, **characterized in that** the layer of abradable material (432) is electrically resistive and is configured to heat in order to oppose the presence of frost on the ferrule (428) when the module for de-icing (438) electrically supplies the said material of the abradable layer (432).

5. Assembly according to one of the claims 1 to 4, **characterized in that** the layer of abradable material (432) includes particles electrically conductive and configured to heat the ferrule (428) in order to oppose the presence of frost on the ferrule (428).

6. Assembly according to one of the claims 1 to 5, **characterized in that** the ferrule (28) includes in addition a bulkhead ring (34) supporting the layer of abradable (32) at the level of the surface of interface, the heater module (38) forming at least partially the said interface.

7. Assembly according to one of the claims 1 to 6, **characterized in that** the heater module (438) includes a source of magnetic field able to heat the layer of abradable (432).

8. Assembly according to one of the claims 1 to 7, **characterized in that** the layer of abradable (232) includes a first layer annular (252) to distance the radially heater module (238) and/or a second layer annular (250) in contact the heater module (238) and that presents a superior thermal conductivity to the thermal conductivity of the first layer (252).

9. Assembly according to one of the claims 1 to 8, **characterized in that** the heater module includes a heating network in thermal contact of the layer of abradable (132), said network eventually being prepared in the radial thickness of the layer of abradable (132), the network including possibly one or more pipes (148) for heating fluid, including a gas or a liquid such of the oil.

10. Turbomachine (2), including a turbojet engine, comprising one or at least two sets, **characterized in that** the or at least two sets is/are consistent(s) to one of the claims 1 to 9, preferentially the turbomachine (2) includes a compressor, the or at least two ferrules (28; 30; 128; 328; 428) of the assembly being internal ferrules of upstream rectifier of that compressor, the compressor being possibly a low pressure compressor (4).

11. Turbomachine (2) according to the claim 10, **characterized in that** it comprises a beak of separation (22), possibly the compressor inlet, the ferrule being an external ferrule (30) the beak of separation (22).

12. Turbomachine (2) according to one of the claims 10 to 11, **characterized in that** it comprises a control unit (46) configured to heat the layer of abradable (32) so that the temperature of the ferrule (28; 30) remains greater than 0° C.

13. Turbomachine (2) according to one of the claims 10 to 12, **characterized in that** it includes a row of annular blades stator (26) rigidly linked to the ferrule (28; 30), the heater module (38) being able to heat up the layer of abradable (32) in order to oppose the presence of frost on the say stator blades (26).

14. Turbomachine (2) according to one of the claims 10 to 13, **characterized in that** the rotor (12) of the turbomachine (2) includes at least one or several lips (44) cooperating by abrasion with the layer of abradable (32), the or at least one or each lips (44) being possibly to axially distance and/or radially to the heater module (38) of the layer of abradable (32).

15. Use of a layer of heating abradable material (32; 132; 232; 332; 432) to defrost a ferrule (28; 30; 128; 328; 428) of axial turbomachine, the layer of abradable material (32; 132; 232; 332; 432) including possibly a silicone material or a composition of silicone aluminium polymer or a composition of nickel aluminium polymer, the said layer of abradable material (32; 132; 232; 332; 432) being preferentially a layer of abradable ferrule (28; 30; 128; 328; 428) associated with a heater module (38; 138; 238 ; 338; 438) in such a way as to form an assembly conforms to one of the claims 1 to 9.
